# EUROPEAN PATENT APPLICATION

(11) **EP 2 851 827 A1**
(43) Date of publication of application: **25.03.2015**
(21) Application number: 13306282.8
(22) Date of filing: 20.09.2013
(51) Int. Cl.: G06F 21/30, G06F 21/31, G06F 21/36, G06Q 20/10, G07F 19/00, G06Q 20/04, G06Q 20/20

(54) **Method for authenticating a user by using an access code, corresponding terminal.**

(71) Applicant: Thomson Licensing, 92130 Issy-les-Moulineaux (FR)
(72) Inventor: Schmouker, Philippe, 35576 Cesson Sévigné (FR); Lambert, Anne, 35576 Cesson Sévigné (FR); Plissonneau, Frederic, 35576 Cesson Sévigné (FR)
(74) Representative: Huchet, Anne

(57) **Abstract**

The invention concerns a terminal (C) for authenticating a user by using an access code composed of a predefined number of digits, which comprises:
- a screen (R) to display a keypad (K) comprising a plurality of cells in an initial arrangement;
- an inverting module (IM) configured for moving at least two cells of said plurality of cells of the keypad (K), including the selected cell.

## Description

### FIELD OF THE INVENTION

The present invention generally relates to authentication processes to access a secure area (e.g. an online bank account) and, more especially, to authentication processes requiring an access code.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Access codes are commonly used in the usual life. They might be required in an authentication mechanism for web-sites, mobile phones, etc., but can also be required to protect access to sensitive information located, for instance, on a remote server.

In many cases, access codes are made of several digits that a user shall successively enter through a dedicated application, thanks to a real or virtual keypad.

In particular, it is already known to have access - via a client terminal (e.g. personal computer, a tablet, a smartphone, etc.) - to a personal bank account through an authentication process on the bank website. During the authentication mechanism, after having provided a login, a virtual keypad appears on the screen of the client terminal to collect the personal access code of the corresponding client. The keypad is usually formed by a plurality of cells (e.g. 10 or 16 cells), a part of them being identified by a unique digit. Additional cells - devoid of any sign - may also be used to improve security. The position of the cells identified by a digit changes between two successive authentications, but remains static during an ongoing authentication.

In case the client terminal is a personal computer controlled by a mouse, the client shall commonly enter his access code by selecting - through mouse clicks - the appropriate cells. When the access code is correct, the client can have access to his personal bank information online.

In case the client terminal comprises a touch screen, the client may directly enter his access code by touching the appropriate cells.

Although such authentication mechanism effectively protects against spyware programs since (e.g. the assessment of the click position is not enough to accurately determine the corresponding digit), it can nevertheless not prevent from determining whether the access code contains at least two identical digits. Once a spyware or a hacker knows that the access code comprised several times the same digits, the security is greatly reduced.

Indeed, for an access code of four digits, there are theoretically 10,000 distinct combinations. When a hacker knows that all digits are different - for instance because all clicks are done in distinct locations on the virtual keypad, the number of possible combinations is reduced to 5,040. When the hacker derives, from the position of the clicks, that one digit is repeated once (i.e. appears twice in the access code), there are only 720 distinct combinations, which corresponds to only 7% of the initial distinct combinations.

The present invention attempts to remedy at least the above mentioned drawback.

### SUMMARY OF THE INVENTION

To this end, the invention concerns a method for authenticating a user by using an access code composed of a predefined number of digits, which is remarkable in that it comprises the following successive steps of:
- displaying, on a terminal, a keypad comprising a plurality of cells in an initial arrangement;
- selecting one cell amongst the plurality of cells of the keypad;
- moving at least two cells of said plurality of cells within the keypad, including the selected cell.

Thus, the present invention can prevent a user from selecting the same cell twice - by modifying the position of the selected cell within the keypad - which can lead to improve security of authentication mechanisms.

In a preferred embodiment, during the moving step, the selected cell can be advantageously moved to an extreme cell of said keypad.

In an aspect of the present invention, said extreme cell is randomly identified.

In another aspect of the present invention, each cell arranged between said selected cell and said extreme cell can replace one of its adjacent cells according to a predetermined path.

Moreover, in a further aspect of the present invention, the selected cell can be inverted with said extreme cell.

Furthermore, only the selected and extreme cells can be moved within the keypad.

In addition, the number of cells of the keypad can be at least equal to 10p, p being an integer. In particular, p can be equal to the number of digits of said access code.

Besides, the present invention also concerns a terminal adapted for authenticating a user by using an access code composed of a predefined number of digits. According to the invention, said terminal comprises:
- a screen to display a keypad (e.g. a virtual keypad) comprising a plurality of cells in an initial arrangement;
- an inverting module configured for moving at least two cells of said plurality of cells of the keypad, including the selected cell.

Moreover, the number of cells of the keypad can be at least equal to 10p, p being an integer.

The present invention also concerns a computer program product downloadable from a communication network and/or recorded on a medium readable by computer and/or executable by a processor, comprising program code instructions for implementing the steps of the method as previously mentioned.

Besides, the present invention concerns a non-transitory program storage device, readable by a computer, tangibly embodying a program of instructions executable by the computer to perform the steps of the previously mentioned method.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 is a schematic diagram of a Client-Server network architecture wherein the present invention might be implemented;
- Figure 2 is a flow chart illustrating the method for authentication compliant with the present invention and implemented by the client terminal of Figure 1;
- Figure 3 illustrates the virtual keypad used during the implementation of the method of Figure 2;
- Figures 4A, 4B, 5A and 5B depict a modification of the cell arrangement of the keypad of Figure 3 according to, respectively, a first illustrative example (Figures 4A and 4B) and a second illustrative example (Figures 5A and 5B) of the present invention.

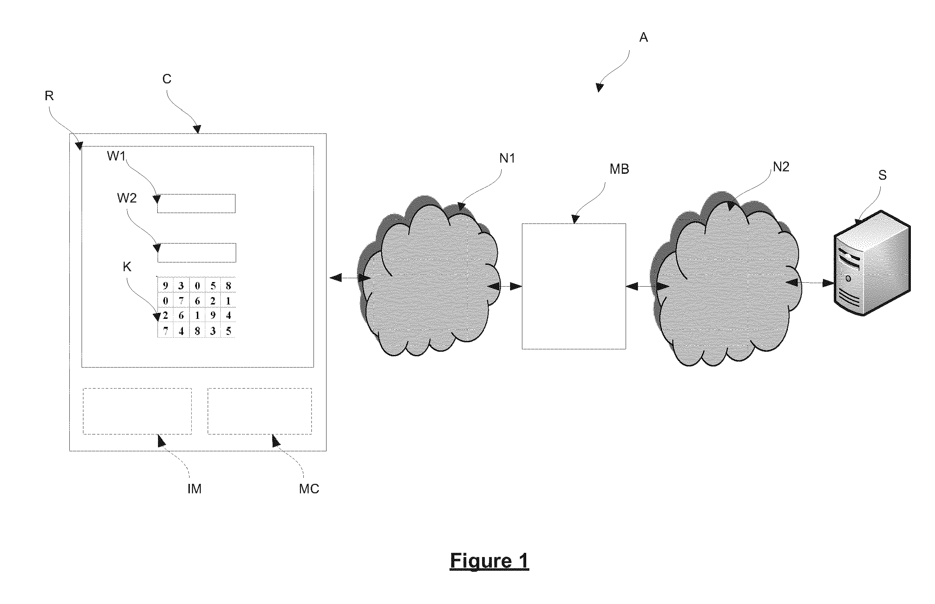

In Figure 1, some of the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

### DETAILED DESCRIPTION OF PREFERRED EMBODIMENTS

It is to be understood that the figures and descriptions of the present invention have been simplified to illustrate elements that are relevant for a clear understanding of the present invention, while eliminating, for purposes of clarity, many other elements found in typical digital terminals.

As shown on Figure 1, a Client/Server network architecture A - wherein a preferred embodiment of the present invention may be implemented - is depicted. Of course, the invention is not limited to such a particular environment.

In particular, in the example of Figure 1, the Client/Server network architecture A comprises a client terminal C (for instance a touch pad, a smartphone, a personal computer, etc.), a middle-box MB (for instance a gateway) and a remote server S (for instance the server of a bank).

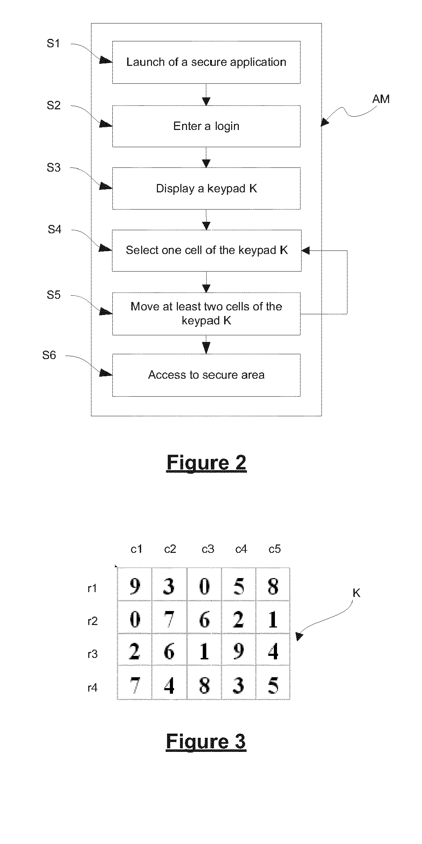

The client terminal C - connected to the middle-box MB through a first network N1 (as a home network) - wants to connect to the server S through a second network N2 (as the Internet network), via an authentication mechanism AM (see Figure 2). The first network N1 is connected to the second network N2 thanks to the middle-box MB. Of course, in a variant, a user may want to access a secure area located on a standalone client terminal, without using any remote server and broadband connection.

The client terminal C and the middle-box MB respectively comprise interfaces of connection (wired and/or wireless, as for example WiFi, Ethernet, etc.) to the first network N1.

The middle-box MB also comprises an additional interface of connection (wired and/or wireless) to the second network N2. Likewise, the server S is equipped with interface of connection to the second network N2.

In addition, as shown on Figure 1, the client terminal C comprises a tactile screen R able to display a virtual keypad K. In a variant, said screen might not be tactile.

At the terminal C, a given user can have access to a secure area (for instance his bank account located on the remote server S) through the authentication mechanism AM (see Figure 2).

To this end, the user may first launch (step S1, Figure 2) a secure application on the terminal C. During the authentication mechanism AM, a first dedicated window W1 - displayed on the screen R of the terminal C - allows the user to enter (step S2) a personal login (e.g. his account number) thanks to, for instance, a usual keypad (not represented) of the terminal C or connected to the latter.

Once the user has entered his login, a virtual keypad K with a second dedicated window W2 may pop up (step S3) on the screen R to allow the user to enter a secret access code. In a variant, the virtual keypad may already be present in the user interface of the secure application. In a further variant of the invention, no login is necessary, but only the access code (e.g. a parental access code). Step S2 is then optional.

It should be noted that first and second windows W1 and W2 and keypad K may appear concurrently or successively on the screen R of the device C.

The secret access code may be composed of predefined number of digits, said number depending of the expected security level. For instance, the access code comprises m digits, m being an integer (e.g. m=4).

According to the present invention, the virtual keypad K may have a rectangular shape and may comprise a plurality of cells arranged in rows (r1, r2, etc., Figure 3) and columns (c1, c2, etc., Figure 3) to form a grid, each cell being identified by a digit from 0 to 9 and a couple of coordinates (row ri; column ci).

In the preferred embodiment, the number of cells of the keypad K may be equal to p times the number of existing digit (namely 10) - p being an integer - so that the number of cells is equal to 10p. For instance, p can be equal to m (m being the number of digits of the user's access code). In this case, the number of cells is equal to 10m. In other words, each digit - out of 0 to 9 - is repeated m times in the virtual keypad K. In a variant compliant with the present invention, the keypad K may comprise a number of cells equal to number of digits (aka ten), so that each digit is only present once.

The cells of the virtual keypad K (appearing in step S3) are displayed according to an initial arrangement, each arrangement being unique between two successive attempts to authenticate. As an illustrative example, said initial arrangement can be obtained by a random distribution of the cells within the virtual keypad K. Obviously, in a variant, a predetermined distribution of cells may also be used.

In addition, as a further variant, additional cells - devoid of any sign (e.g. a digit) - may also be added to the virtual keypad K to improve security, so that the total number of cells is equal to 10p plus the number of additional cells. The position of blank cells may be randomly determined.

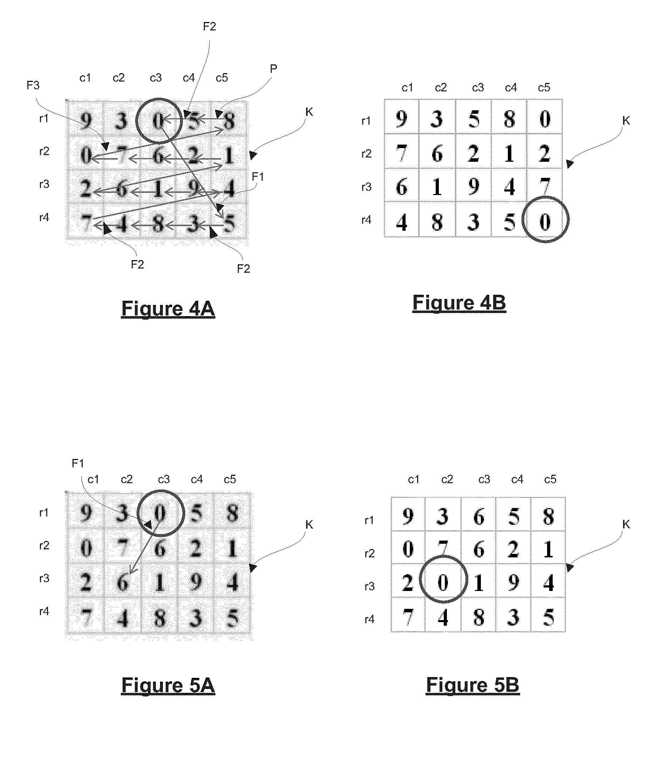

Upon a user action (for instance a mouse click, a touch on the screen, a press on a real keypad), one cell amongst the plurality (the circled cell 0 on Figures 4A and 4B) of the virtual keypad K may be selected (step S4) by the user.

According to the preferred embodiment of the present invention, after the cell selection, two or more cells of the virtual keypad K - including the selected cell - are moved (step S5) within the grid of the keypad K, thanks to an inverting module IM of the terminal C. In a variant, the inverting module may be arranged within the server S or in the cloud.

These cells may be shifted in a predetermined manner. The selected cell may be moved to the position of a given cell of said keypad K, called extreme cell. The extreme cell may for instance be randomly determined or, by contrast, duly identified. In that case, the extreme cell can either:
- be moved to an adjacent cell (see Figure 4A and 4B); or
- be inverted with the selected cell (see Figures 5A and 5B).

Each cell of the keypad K arranged between said selected cell and said extreme cell - hereinafter called internal cells - can be moved to one of its adjacent cells.

It should be understood that an adjacent cell of a given internal cell might be the cell located:
- on the right of the given cell, on the same row;
- on the left of the given cell, on the same row;
- above the given cell, on the same column;
- beneath the given cell, on the same column;
- at the opposite edge of the row above or below the row of the given cell;
- at the opposite edge of the column arranged on the right or on the left of the column of the given cell;
- etc.

Advantageously, as shown on Figure 4A, internal cells may be moved in a predefined manner following a given path P. As an illustrative, but non limitative example, the path P may be defined by the successive of arrows F1, F2 and F3 (Figure 4A). Obviously, arrows may have different orientation and direction.

In another variant, the internal cells may be either randomly shifted between themselves or kept unchanged.

In a further variant, only some cells - including the selected cell - may be moved, e.g. randomly moved. The number of cells to be moved may also be randomly determined.

Steps S4 and S5 are preferably repeated as many times as the number of digits of said access code.

When the access code entered by the user is correct, an access to the requested secure area is provided (step S6) to said user.

It has to be noticed that some of the steps S1 to S6 of the authentication mechanism AM might be performed on the terminal C and/or on the remote server S, the latter receiving data from terminal C from a communication module MC (see Figure 1).

In a first example compliant with the invention illustrated on Figures 4A and 4B, the keypad K comprises 20 cells (i.e. p=2), each cell being identified by a digit. The access code is composed of four digits. Each digit is then repeated twice (namely, two cells with digit 0, two cells with digit 1, etc.).

In this example, Figure 4A represents the keypad K at the beginning of the authentication mechanism AM - once a user has selected one cell (cell 0 circled on Figure 4A) - and Figure 4B shown the result after modifying the cell arrangement. Each cell of the keypad K is identified by a row (r1 to r4) and by a column (c1 to c5). As shown by the arrow F1, the selected cell 0 is moved to the position of an extreme cell identified by the digit 5 (r4; c5). The extreme cell 5 (r4; c5) replaces its adjacent cell 3 (r4; c4) as illustrated by arrow F2. The internal cells - initially arranged between selected cell 0 and extreme cell 5 - are moved along the path P defined by arrows F1, F2 and F3. For instance, cell 7 (r4; c1) is moved to its adjacent cell 4 (r3; c5), as illustrated by arrow F3. Cell 4 (r3; c5) is moved to its adjacent cell 9 (r3; c4), etc. Obviously, in variant, many other kinds of patterns may be used to invert internal cells, as for instance a random model.

In a second example compliant with the invention illustrated on Figures 5A and 5B, the keypad K is the same as the one described in Figures 4A.

In this second example, as Figures 4A and 4B, Figures 5A and 5B illustrate the keypad K at the beginning of the authentication mechanism AM - once a user has selected one cell (Figure 5A) - and the modification of the cell arrangement of the keypad K after the selection (Figure 5B). As shown by arrow F1, the selected cell 0 is inverted with an extreme cell 6 (r3; c2). In this example, the internal cells - initially arranged between selected cell 0 and extreme cell 6 - are kept unchanged as shown on Figure 5B. The selection of the extreme cell might be randomly performed.

In a further variant of the preferred embodiment, the selected cell might be de-activated not to be selected another time by the user. In other words, the selected cell is kept unchanged but, when a user selects again the previously selected cell (the access code comprising at least two identical digit), said selection is not taken into account by the secure application.

It will be understood that, although not illustrated in Figure 1 for the sake of clarity, the terminal C comprises the necessary hardware and software resources for performing its respective functions, such as for example communication interfaces, memory, operating systems and user interfaces.

Reference numerals appearing in the claims are by way of illustration only and shall have no limiting effect on the scope of the claims.

This invention having been described in its preferred embodiment, it is clear that it is susceptible to numerous modifications and embodiments within the ability of those skilled in the art and without the exercise of the inventive faculty. Accordingly, the scope of the invention is defined by the scope of the following claims.

In the claims hereof, any element expressed as a means for performing a specified function (e.g. the inverting module IM, the communication module CM) is intended to encompass any way of performing that function including, for example, a) a combination of circuit elements (for instance one or more mechanisms) that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

## Claims

1. Method for authenticating a user by using an access code composed of a predefined number of digits,
**characterized in that** it comprises the following successive steps of:
- displaying (S3), on a terminal (C), a keypad (K) comprising a plurality of cells in an initial arrangement;
- selecting (S4) one cell amongst the plurality of cells of the keypad (K);
- moving (S5) at least two cells of said plurality of cells within the keypad (K), including the selected cell.

2. Method according to claim 1, wherein, during the moving step (S5), the selected cell is moved to an extreme cell of said keypad (K).

3. Method according to claim 2, wherein said extreme cell is randomly identified.

4. Method according to claim 2 or 3, wherein each cell arranged between said selected cell and said extreme cell replaces one of its adjacent cells according to a predetermined path (P).

5. Method according to any one of claims 2 to 4, wherein the selected cell is inverted with said extreme cell.

6. Method according to claim 5 and claim 2 or 3, wherein only the selected and extreme cells are moved within the keypad (K).

7. Method according to any one of claims 1 to 6, wherein the number of cells of the keypad (K) is at least equal to 10p, p being an integer.

8. Method according to claim 7, wherein p is equal to the number of digits of said access code.

9. Terminal adapted for authenticating a user by using an access code composed of a predefined number of digits,
**characterized in that** it comprises:
- a screen (R) to display a keypad (K) comprising a plurality of cells in an initial arrangement; and
- an inverting module (IM) configured for moving at least two cells of said plurality of cells of the keypad (K), including the selected cell.

10. Terminal according to claim 9, wherein the number of cells of the keypad (K) is at least equal to 10p, p being an integer.

11. Terminal according to claim 9 or 10, wherein the keypad is a virtual keypad (K) displayed on the screen (R) of the terminal (C).

12. Computer program product downloadable from a communication network and/or recorded on a medium readable by computer and/or executable by a processor, comprising program code instructions for implementing the steps of a method according to at least one of claims 1 to 8.

13. Non-transitory program storage device, readable by a computer, tangibly embodying a program of instructions executable by the computer to perform the steps of a method according to at least one of claims 1 to 8.
